Europäisches Patentamt

European Patent Office

Office européen des brevets

(11) Publication number: **0 253 792**
**A2**

## (12) EUROPEAN PATENT APPLICATION

(21) Application number: **87870079.8**

(22) Date of filing: **10.06.87**

(51) Int. Cl.⁴: **C 08 J 5/18**
**C 08 L 23/04, C 08 L 23/12**

(30) Priority: **13.06.86 US 874190**

(43) Date of publication of application:
**20.01.88 Bulletin 88/03**

(84) Designated Contracting States:
**BE DE ES FR GB IT LU NL SE**

(71) Applicant: **Monsanto Company**
**Patent Department 800 North Lindbergh Boulevard**
**St. Louis Missouri 63167 (US)**

(72) Inventor: **Barrial, Constantino J.**
**260 Desoto Place**
**Fairview New Jersey 07022 (US)**

**Rosa, Steven George**
**22 Drexel Drive**
**Chelmsford Massachusetts 01824 (US)**

(74) Representative: **McLean, Peter et al**
**Monsanto Europe S.A. Patent Department Avenue de**
**Tervuren 270-272 Letter Box No 1**
**B-1150 Brussels (BE)**

A request for correction of line 4 and line 12 on page 6 of the original description has been filed pursuant to Rule 88 EPC. A decision on the request will be taken during the proceedings before the Examining Division (Guidelines for Examination in the EPO, A-V, 2.2).

(54) **Film composition.**

(57) A thermoplastic film composition for the manufacture of films having improved tape adhesion is provided. The film composition comprises from 0% to about 95%, by weight, linear low density polyethylene; from 0.1% to about 50%, by weight polypropylene; and from 0% to about 95%, by weight, low density polyethylene.

EP 0 253 792 A2

**Description**

FILM COMPOSITION

BACKGROUND OF THE INVENTION

The present invention relates to articles formed from thermoplastic sheets or films. More particularly, the invention is related to a composition for a continuous sheet or film of thermoplastic material for use in making disposable baby diapers or other similar absorbent devices, both disposable and reusable. Even more particularly, this invention relates to an improved film composition for the manufacture of films which have improved tape adhesion to enable the adjustment, repositioning, or removal and reinstallation of the diaper during its use.

Disposable absorbent articles such as diapers are well known in the prior art and have many uses. These articles are manufactured such that an absorbent core is encased in an outer covering layer having a liquid permeable top sheet and a liquid impermeable back sheet. Generally the liquid impermeable back sheet comprises a continuous sheet or film of thermoplastic material. When the article is used, the impermeable back sheet is usually fastened to itself. Since the normal fastening devices such as pins cannot be used in the thermoplastic sheets, it has become common to use adhesive tape to fasten the absorbent article so that it may be retained in place upon the wearer during use. However, such tape has long suffered from the problems of failure to adhere to the thermoplastic sheet, which makes the absorbent article unwearable, and inability to be removed and refastened, which makes an otherwise usable article unuseable.

It is an object of the present invention to provide a thermoplastic material which may be formed in a continuous sheet or film. It is another object of this invention to provide a thermoplastic film which will have improved tape adhesion. It is a further object of this invention to provide a thermoplastic film which will improve the adherence of adhesive tapes when such tape has been removed and refastened to such film.

BRIEF DESCRIPTION OF THE DRAWINGS

Figure 1 is a graph of the peel force required to remove pressure sensitive tape from plastic film versus the linear low density polyethylene content in the film.

Figure 2 is a graph of the peel force versus the polypropylene content of the film.

SUMMARY OF THE INVENTION

According to the present invention, a thermoplastic film composition comprises a polyolefin having about 0% to about 95%, by weight, linear low density polyethylene (LLDPE), from 0.1% to about 50% by weight, polypropylene and from 0% to about 95%, by weight, low density polyethylene (LDPE). For maximum tape adhesion, it is preferable that the LLDPE be hexene LLDPE, although octene or butene LLDPE may also be used. The inclusion of polypropylene in the polyethylene significantly increases the ability of tape to adhere to the thermoplastic film.

DESCRIPTION OF THE PREFERRED EMBODIMENTS

According to the present invention, a thermoplastic film or sheet is produced. Film typically has a thickness less than about 0.5 mm (about 20 mils) and sheets typically have a thickness greater than the thickness of films; however, the term film will be used hereafter to refer to both films and sheets.

A thermoplastic film having improved tape adhesion is produced having the composition of between 0% and about 95%, by weight, linear low density polyethylene (LLDPE); between 0.1% and about 50%, preferably between 0.1% and about 30% and more preferably between 0.1% and about 10% by weight, of polypropylene; and between 0% and about 95%, by weight, of low density polyethylene (LDPE).

The LLDPE adds strength to the film by increasing the yield strength, ultimate breaking strength and impact strength. It is produced by copolymerizing ethylene with a selected $\alpha$-olefin comonomer. The $\alpha$-olefin comonomer can be butene, hexene, or octene. Hexene LLDPE is preferred for use in this invention as it provides for better tape adhesion to the film than does the use of octene LLDPE or butene LLDPE. However, octene or butene LLDPE may be preferred for other reasons.

From 0% to about 95%, by weight, of low density polyethylene (LDPE) is used in the film composition. The LDPE is a highly branched, conventional polyethylene which is added to improve the processability of the composition during the production of film.

From 0.1% to about 50%, and preferably between about 0.1% and about 30%, and more preferably between about 0.1% and about 10% by weight, of polypropylene is also added to the thermoplastic film composition. The addition of the polypropylene to the film significantly increases the ability of tape to adhere to the film. The polypropylene is produced by the polymerization of propylene in which two types of polypropylene are formed, homopolymer and copolymer. While the homopolymer of polypropylene was used, it is believed that the copolymer will also perform satis factorily in the production of film having increased tape adhesion.

For the purposes of this invention, the ratio of LLDPE to LDPE in the thermoplastic film is not critical. LLDPE may be used, LDPE may be used, or any blend of LLDPE and LDPE may be used with the polypropylene to produce the film. The ratio of LLDPE to LDPE in the film will be established to enable the film to meet other process specifications while the addition of polypropylene, in accordance with this invention, will improve the ability of tape to adhere to the film. Since polypropylene provides from about 0.1% to about 50%, by weight, of the thermoplastic film composition, the blend of LLDPE and LDPE will provide between about 50% and about 99.9%, by weight, of the thermoplastic film composition.

A pigment is often added to the film composition to provide color or opacity to the film. A typical pigment is titanium dioxide ($TiO_2$). The pigment concentration in the film is typically about 3%, by weight. To improve the film production process and/or the film performance during use, other additives such as anti-block agents, antioxidants, colorants and lubricants and other processing aids may be added.

The film may be produced by any process. The process described herein below may be used to produce the film; however, other processes are equally applicable.

A feeder and blending system is used to measure the required amounts of each component material of the film and to blend the materials together prior to their being fed into the hopper of an extruder. The screw of the extruder forces the material through the extruder while creating a high pressure and raising the material to a high temperature. During the passage through the extruder, the increasing temperature causes the blended solids to melt and the action of the extruder screw mixes the molten material to form a homogeneous molten plastic mass at the desired operating temperature and pressure for the extrusion into a film. The molten plastic mass is forced through a die to form a web having a predetermined desired thickness which passes between a pair of rolls which form a nip to provide the desired film thickness.

Tape adhesion is affected by surface geometry to some extent; however, major changes to the pattern embossed upon the film may be required to achieve very small changes in the ability of tape to adhere to the film surface. On the other hand, the major factor affecting the ability of the tape to adhere to the film is the composition of the film; thus minor changes in the composition of the film can make substantial changes in the adhesion of the tape to the film.

Peel Force is the force required to remove a pressure sensitive tape from the plastic film at a specified angle and speed. The test used was a modification of Test PSTC-1, a standard test used and published by the Pressure Sensitive Tape Counsel. Test PSTC-1 is used to measure the force required to remove a pressure sensitive tape from a surface. One end of the tape strip is removed from the film surface and the tape is pulled back over itself at an angle of 180° which gives it the shape of a "U". The tape is removed at a rate of 30.5 centimeters per minute (12 inches per minute) and the force required to remove the adhesive tape is measured. Test PSTC-1 was modified to express the peel force in grams per 25 mm of tape width instead of pounds per inch of tape within.

Pressure sensitive tapes are similar to one another. Scotch Brand, Type KRO 257, pressure sensitive tape produced by 3M Company was used is a typical tape that was used for some tests. The use of other tapes will change the magnitude of the measured peel force; however, the peel force relationships among the several kinds of film will remain the same, that is, the nexene LLDPE film will still exhibit a higher peel force thatn the butene-or-octene-LLDPE films.

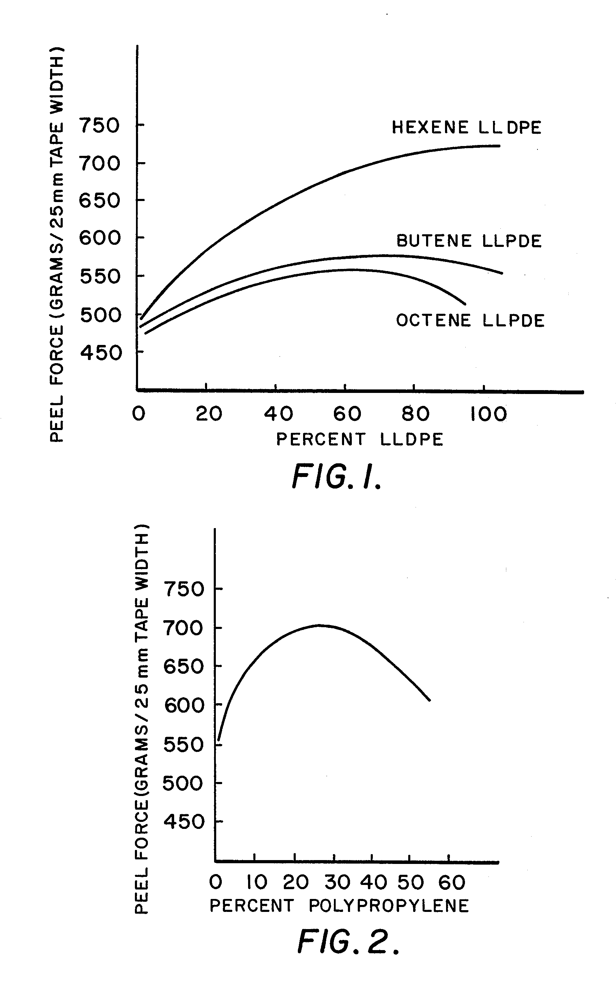

Three types of linear low density polyethylene resin (LLDPE) can be produced by copolymerizing ethylene with selected α-olefin comonomers. The comonomer can be butene, hexene or octene. To determine the tape adhesion characteristics of each of the three LLPDE resins, film was produced blending each with low density polyethylene (LDPE) while varying the percent of LLDPE in the blended composition between approximately 0% and approximately 95%. Approximately 2.5%, by weight, of titanium dioxide was included in each blend for film opacity. The film was extruded as described hereinabove and the film tape adhesion values, the peel force, were measured using Test PSTC-1. The adhesion values determined by the test are shown in Figure 1 which is a graph of the peel force, in grams per 25 mm of tape width, required to remove the pressure sensitive tape from the plastic film versus the percent LLDPE in the film composition. The curves shown in Figures 1 illustrate that the blend of hexene-LLDPE with LDPE has a significantly higher peel force throughout the range of LLDPE content when compared to the films containing butene-LLDPE or octene-LLDPE.

Similar tests were made using film containing blends of octene-LLDPE and LDPE with the addition of polypropylene. Each blend contained approximately 2.5% by weight, of titanium dioxide pigment to produce an opaque film. The composition of the film was varied between approximately 35% and approximately 95%, by weight, octene-LLDPE with the remainder being LDPE, polypropylene and titanium dioxide. The amount of polypropylene in the composition was varied from 0% to approximately 50% by weight, and the amount of LDPE was varied from 0% to approximately 10%, by weight. The film composition included a masterbatch (MB) which was 50% titanium dioxide and 50% LDPE. The peel force to remove the Scotch brand pressure sensitive tape from the film was measured in accordance with Test PSTC-1. The results of these tests are shown in Table 1 where the film composition is shown in weight prcentages and the tape peel force is shown in grams per 25 mm of tape width.

## TABLE 1

| Test | Octene-LLDPE wt.% | LDPE wt.% | MB wt.% | Polypropylene wt.% | Tape Peel Force |
|---|---|---|---|---|---|
| 1 | 95 | 0 | 5 | 0 | 547 |
| 2 | 85 | 0 | 5 | 10 | 647 |
| 3 | 75 | 10 | 5 | 10 | 678 |
| 4 | 65 | 10 | 5 | 20 | 704 |
| 5 | 35 | 10 | 5 | 50 | 634 |

Figure 2 is a graph of the results in which the peel force, in grams per 25 mm of tape width, to remove the tape from the film is plotted against the percent polypropylene in the film blend. Figure 2 illustrates that the peel force rises as the polypropylene content of the film blend increases from near 0% and that the peel force reaches a maximum when the polypropylene content is between approximately 20% and approximately 30%, by weight, of the film composition. As the polypropylene content is increased above approximately 30%, the peel force decreases.

A comparison of the curves shown in Figure 1 and in Figure 2 shows the benefits available through the use of the film compositions of this invention. Referring to the curve for octene-LLDPE in Figure 1 shows that the peel force is approximately 560 grams per 25 mm of tape width when the octene-LLDPE content of the film blend is approximately 60%. Referring now to Figure 2, and Table 1, it is shown that the addition of 20% polypropylene to the film composition of approximately 60% octene-LLDPE blended with LDPE will increase the tape peel force to approximately 700 grams per 25 mm of tape width. The use of polypropylene to increase the peel force reaches its maximum between approximately 20% and approximately 30%, by weight, polypropylene content when the peel force is approximately 700 grams per 25 mm of tape width.

However, lower amounts of polypropylene in the film composition also provide increased tape peel forces without the problems caused by using high amounts of polypropylene. When a film composition of approximately 85%, by weight, octene-LLDPE, approximately 10%, by weight, LDPE, and approximately 5%, by weight, of titanium dioxide was tested, the tape peel force was about 540 grams per 25 mm of tape width as shown in Figure 1. Replacing the LDPE with approximately 10%, by weight, polypropylene as shown in Table 1 and Figure 2 increased the tape peel force to approximately 650 grams per 25 mm of tape width.

The peel force reaches its maximum when the thermoplastic film has a composition which includes between approximately 20% and approximately 30%, by weight, polypropylene. However, polypropylene does not form a homogeneous blend with polyethylene; thus, the use of these high concentrations of polypropylene causes the degradation of other desirable film properties such as impact strength. It is, therefore, preferably to limit the polypropylene content of the film to a range between approximately 0.1% and approximately 10% by weight. This lower level of polypropylene concentration within the polyethylene film provides a film which has all of the desirable properties of polyethylene film, such as its toughness, while having the improved tape adhesion that the polypropylene can provide. Such a film is particularly suitable for use in the manufacture of disposable baby diapers or other similar absorbent devices where it is desirable to be able to remove and restick the tape fasteners.

**Claims**

1. A thermoplastic composition suitable for the manufacture of films having improved tape adhesion, comprising from 0% to 95%, by weight, linear low density polyethylene; from 0.1 to 50%, by weight, polypropylene; and from 0% to 95%, by weight, low density polyethylene.

2. A thermoplastic composition of Claim 1 wherein the combined weights of the linear low density polyethylene and of the low density polyethylene together provide between 50% and 99.9% by weight of the composition.

3. A thermoplastic composition of either Claim 1 or Claim 2, wherein the polypropylene is present in an amount between 0.1% and 30%, by weight.

4. A thermoplastic composition of Claim 3, wherein the polypropylene is present in an amount between 0.1% and 10%, by weight.

5. A thermoplastic composition of any of the preceding claims, wherein the polypropylene is a homopolymer.

6. A thermoplastic composition of any of the preceding claims, wherein the linear low density polyethylene is a copolymer chosen from octene linear low density polyethylene and butene linear low density polyethylene.

7. A thermoplastic composition of any of Claims 1 to 5, wherein the linear low density polyethylene is hexene linear low density polyethylene.

8. A thermoplastic composition of any of the preceding claims further comprising up to 5%, by weight, of a pigment to provide opacity to said film.

9. A thermoplastic composition of Claim 8 wherein the pigment is titanium dioxide.

10. A film made from a composition according to any of the preceding claims.

0253792

FIG. 1.

FIG. 2.